# EUROPEAN PATENT SPECIFICATION

(11) **EP 3 335 982 B1**
(45) Date of publication and mention of the grant of the patent: **30.09.2020**
(21) Application number: 16382612.6
(22) Date of filing: 16.12.2016
(51) Int. Cl.: B64C 1/26

(54) **AIRCRAFT HAVING A REAR SECTION WITH A CONTINUOUS SKIN FOR THE FUSELAGE AND THE VERTICAL TAIL PLANE**
FLUGZEUG MIT EINEM HECKABSCHNITT MIT DURCHGEHENDER HAUT FÜR DEN RUMPF UND DAS SEITENLEITWERK
AÉRONEF AYANT UNE SECTION ARRIÈRE COMPRENANT UN REVÊTEMENT CONTINU POUR LE FUSELAGE ET L'EMPENNAGE VERTICAL

(43) Date of publication of application: 20.06.2018
(73) Proprietor: Airbus Operations, S.L., 28906 Getafe Madrid (ES)
(72) Inventor: MARTINO GONZÁLEZ, Esteban, 28906 Getafe (ES); FOLCH CORTÉS, Diego, 28906 Getafe (ES); PINA LÓPEZ, José María, 28906 Getafe (ES)
(74) Representative: Elzaburu S.L.P.

(56) References cited:
- EP-A1- 2 610 164
- WO-A1-2008/121005
- GB-A- 2 495 846
- US-A- 4 448 372
- US-A1- 2010 148 000
- US-A1- 2016 311 515

## Description

### FIELD OF THE INVENTION

The present invention relates to a rear section of an aircraft having attached a vertical tail plane and more particularly to a configuration that includes a propulsion system attached to the rear fuselage.

### BACKGROUND OF THE INVENTION

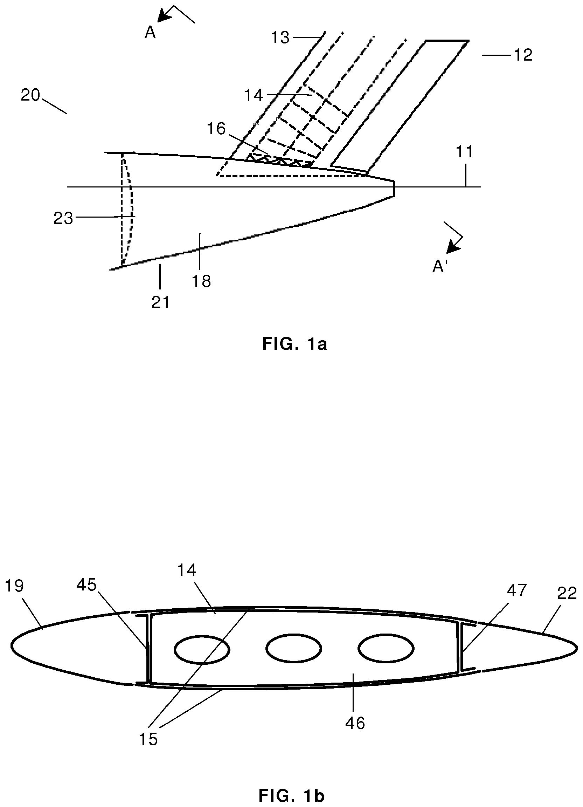

This invention refers mainly to aircraft having a rear section 20 configured with an empennage 12, comprising a vertical tail plane 13 and an upper horizontal tail plane behind the propulsion system, joined to the fuselage rear section 21 (see Figs. 1a and 1b).

The vertical tail plane 13 comprises, typically, a leading edge 19, a torsion box 14 and a trailing edge 22. The torsion box 14 comprises front and rear spars 45, 47, ribs 46 and left and right lateral skins 15 stiffened by stringers (not shown in Figs. 1a and 1b). The torsion box 14 is joined to the leading edge 19 and to the trailing edge 22 forming its aerodynamic contour. The trailing edge 22 also comprises a movable surface called rudder not represented on Figure 1b for simplicity.

Regarding the fuselage rear section 21, extending from the rear pressure bulkhead 23 to its end, the main structural elements are the skin 18 and the frames 41 arranged conventionally perpendicularly to the aircraft longitudinal axis 11. The skin 18 is stiffened longitudinally with stringers to reduce the skin thickness, making it more competitive in terms of weight, while the frames 41 avoid the overall instability of the fuselage and can be subjected to the introduction of local loads by means of interface attachments.

In known aircraft, the junction between the lateral skins 15 of the vertical tail plane 13 and the fuselage rear section 21 is performed by means of main interface fittings 16. The main loads of the torsion box 14 are passing through its lateral skins 15 and are transferred to the frames 41 of the fuselage at punctual locations where the main interface fittings 16 are located. The frames 41 then distribute these main loads to the fuselage skin 18. The frames 41 affected by the main interface fittings 16 must therefore withstand the introduction of significant punctual loads from the vertical tail plane 13 and therefore must be reinforced and dimensioned for it. Conventionally these frames are heavy metallic frames as the composite ones are not able to withstand these high punctual loads in a competitive manner.

Moreover the loads located on the spars 45, 47 of the torsion box 14 are transferred to the fuselage skin 18 by means of discrete attachment means (not shown). These loads are significant lower than the ones carried by the lateral skins 15 and the main interface fittings 16 so the penalty of said attachment means is much lower, not affecting so significantly to the fuselage frames 41. Consequently, the main problem to be improved at the first place is the drawback of the main interface fittings 16.

In order to allow a smooth aerodynamic contour, the main interface fittings 16 are covered by external fairings which cause additional penalty weight and aero-drag. They also increment the manufacturing cost as they are additional secondary structure that needs to be installed after the vertical tail plane 13 in the final assembly line, increasing the lead time and complexity of this final process. They are also thin nonstructural components that can be easily damaged during the operation of the aircraft so they need to be replaced or repaired frequently, because they affect the esthetics of the aircraft, impacting its operational cost.

Although several solutions for the main interface fittings 16, the supporting frames 41 and the covering fairings are known, both its weight and high complexity represent drawbacks for the performance, manufacture and operability of the aircraft.

Another problem of aircraft having the above mentioned configuration, when they are provided with a propulsion system in the rear section of the aircraft, is related to failure events such an UERF ("Uncontained Engine Rotor Failure") event, i.e. an event where a part of the rotors of the gas generator or of the fan of the engine breaks and it is released with high energy and impacts the empennage, fuselage and opposite engine. In that case, the main interface fittings 16 joining the empennage 12 to the fuselage rear section 21 and the surrounding areas are highly loaded and if they are damaged by impacts of engines debris or other damage sources, the empennage 12 could be detached. This situation is catastrophic as the aircraft is not able to perform safe continuation of flight and landing without this element. To mitigate this problem, the main interface fittings 16 need to be duplicated to assure a fail-safe situation, so that there are always sufficient not damaged remaining fittings to assure minimum load paths to secure that the empennage is not detached. As a result of this structure duplication, there is a weight penalty for the aircraft.

When the engines debris impacts the opposite engine, both engines are lost and the situation is also catastrophic, as the aircraft is not able to perform safe continuation of flight and landing, depending on the flight phase.

In order to reduce the damage on the fuselage and the empennage and to stop the debris before impacting the opposite engine, additional reinforcement and shielding is added to the rear end impacted zones, producing significant additional penalty weight and complexity.

In particular, it is necessary to add an additional structure called dorsal fin to stop the debris trajectories impacting the opposite engine and not intersecting first the empennage or the fuselage. This dorsal fin is an extension of the vertical tail plane structure on its front area, and it is conventionally also attached to the fuselage by discrete fittings covered by fairings, and leading to equivalent drawbacks and weight penalizations as previously described.

The present invention is addressed to the solution of said problems.

It is known document GB2495846 disclosing an aircraft comprising a twin-deck fuselage in which an upper deck support structure is utilized for carry-through of a mid-mount main wing box which connects with wings. The main landing gear of the aircraft is mounted to the fuselage and is stowed in a non-pressurized area below the main wing box (enabled due to an optimized wing box geometry). A pressurized passageway/cargo/ galley complex separates the main landing gear box and the main wing box. The upper deck is continuous, while the lower deck is separated by the wheel wells into two distinct fore and aft areas for either cargo or passengers. The aircraft further comprises an integrated vertical fin and an aft-extended pressurized deck area for reduced double-deck wetted area. More specifically, the double-deck pressurized fuselage structure is extended to form a blending structure to which a structural box of the vertical fin is attached.

### SUMMARY OF THE INVENTION

The invention provides an aircraft rear section comprising a fuselage rear section, an empennage including at least a vertical tail plane and a continuous skin formed by two lateral sides placed symmetrically with respect to the middle vertical plane of the aircraft.

Each lateral side of the continuous skin comprises an upper portion corresponding to the skin of the torsion box of the vertical tail plane, a lower portion corresponding to the skin of for the fuselage rear section and a transition portion between the upper and lower portions.

The continuous skin is joined to inner structural components of the fuselage rear section and of the vertical tail plane. The aircraft rear section comprises a top panel for the portion of the fuselage rear section not covered by the continuous skin, the rear fuselage section comprising vertical frames and the vertical tail plane comprising a front and a rear spar, kink angles being formed between a front vertical frame and the front spar and a rear vertical frame and the rear spar, the top panel being placed at the kink location as a continuation of the upper skin of the fuselage forward of the vertical plane, and the continuous skin being formed by two lateral sides placed symmetrically with respect to the middle vertical plane of the aircraft, each side comprising the upper portion, the lower portion and the transition portion.

The continuous skin is therefore able to transmit the loads of the vertical tail plane directly from its upper portion to its lower portion.

The transition portion is a fillet-shaped portion providing a smooth transition between the upper and lower portions. Several configurations are available to be adapted to particular needs.

Therefore the aircraft rear section of the invention has a more continuous joint between the fuselage and the empennage to assure a better distribution of loads in order to reduce weight and complexity penalties.

The continuous skin may be split in parts to facilitate the assembly of the aircraft rear section.

The inner structural components joined to upper, transition and lower portions of the continuous skin comprise fuselage frames and front and rear spars and ribs of the vertical tail plane, ensembles of frames and spars, multi-spar structures or combinations of said components.

In certain embodiments (particularly for aircraft rear sections provided with engines attached to rear fuselage), the fuselage rear section also comprises a dorsal fin with internal structural components and the continuous skin also comprises an additional upper portion for the dorsal fin. The continuous skin is structured to provide protection against impacts of detached parts of engines to guarantee the capability of the aircraft to .perform safe continuation of flight and landing.

The invention is applicable to an aircraft rear section with an empennage formed by two vertical tail planes in a V-tail configuration.

In an embodiment, the continuous skin, the top panel and the inner structural components are made of composite, being the inner structural components joined to the continuous skin and to the top panel by mechanical discrete means such as rivets or bolts or by continuous surface contact means as resin or bonding interfaces performed by co-curing, co-bonding or secondary co-bonding or equivalent methods.

In another embodiment, the continuous skin, the top panel and the inner structural components are made of metallic materials or a combination of metallic and composite materials, being the inner structural components joined to the continuous skin and to the top panel preferably by mechanical discrete means such as rivets or bolts.

Other characteristics and advantages of the present invention will be clear from the following detailed description of embodiments illustrative of its object in relation to the attached figures.

### DESCRIPTION OF THE DRAWINGS

Figure 1a is a partial lateral schematic view of an aircraft rear section with an empennage formed by a vertical tail plane and an upper horizontal tail plane.
Figure 1b is a schematic sectional view by the plane A-A of Figure 1a illustrating the different components of a conventional vertical tail plane.
Figures 2a and 2b are, respectively, lateral schematic views of the internal structural components and of the continuous skin of an aircraft rear section illustrating an embodiment of the present invention.
Figures 3a, 3b; 4a, 4b; 5a, 5b; 6a, 6b are schematic sectional views by planes A-A, B-B of Figure 2b illustrating four embodiments of the transition section of the continuous skin (with circles highlighting the geometrical intersection points between different parts).
Figures 7a, 7b, 7c, 7d, 7e, 7f and 7g are lateral schematic sectional views of an aircraft rear section illustrating respectively five embodiments of a continuous skin split in parts and two embodiments with fillet extension in their front and rear areas.
Figure 8a is a lateral schematic sectional view of the internal structural components of the aircraft rear section in an embodiment of the invention.
Figures 8b and 8c are schematic sectional views by planes B-B, C-C of Figure 8a, illustrating the joining means of the different parts.
Figure 8d is a detailed view of alternative joining means and Figure 8e is a partial schematic sectional view by plane D-D of Figures 8b and 8d.
Figure 8f is a partial schematic plan view by plane E-E of Figure 8b showing the intersection of the front spar area.
Figure 8g is a partial schematic plan view by plane F-F of Figure 8c showing the intersection of the rear spar area.
Figure 8h is the same view of Figure 8g in which the continuous skin has been removed for clarity and the junction line between the continuous skin and the top panel is represented.
Figure 9a is a lateral schematic sectional view of the internal structural components of an aircraft rear section in an embodiment with an independent rear cone.
Figure 9b is a detailed view of the junction of the rear cone to the fuselage rear section.
Figure 9c is a partial sectional view by the plane F-F of Figure 9b.
Figure 9d is the same view of Figure 9c in which the continuous skin has been removed for clarity and the junction line between the lateral skin and the upper skin is represented.
Figure 10a is a lateral schematic sectional view of the internal structural components of an aircraft rear section comprising front and rear frame-spar ensembles and slanted frames.
Figure 10b is a sectional view by plane B-B of Figure 10a.
Figure 10c is a detailed view of an alternative joint between the top panel and the continuous skin to that shown in Figure 10b.
Figure 10d is a partial sectional view by plane D-D of Figure 10b and 10c showing a schematic diagram of a particular joining of both rear and front spar areas.
Figure 10e is a partial section view by the plane F-F of Figure 10d.
Figure 10f is a version of Figure 10e in which the continuous skin has been removed for clarity and the junction line between the continuous skin and the top panel is represented.
Figure 10g is a partial section view by the plane F-F of Figure 10d showing the intersection of the front spar area when the top panel is interrupted at the crossing with the frame-spar ensemble and in which the lateral skin are removed for clarity and the junction line between the continuous skin and the top panel is represented.
Figures 10h, 10i, 10j are similar to Figures 10e, 10f, 10g for the rear spar area.
Figure 11 is a lateral schematic sectional view of the internal structural components of an aircraft rear section comprising a rear frame-spar ensemble.
Figure 12a is a lateral schematic sectional view of the internal structural components of an aircraft rear section comprising an independent rear cone.
Figure 12b is a detailed view of the junction of the rear cone to the fuselage rear section.
Figure 12c is a partial sectional view by the plane F-F of Figure 11b.
Figure 12d is the same view of Figure 11c in which the continuous skin has been removed for clarity and the junction line between the continuous skin and the top panel is represented.
Figure 13 is a lateral schematic sectional view of the internal structural components of an aircraft rear section without a top panel between the front/rear spar-ensembles.
Figure 14 is a lateral schematic sectional view of the internal structural components of an aircraft rear section with a multi-spar sub-structure.
Figures 15a and 15b are, respectively, lateral and plan views of an aircraft rear section provided with an open rotor propulsion system and with a dorsal fin.
Figures 16a and 16b are, respectively, schematic lateral and sectional views of the internal structural components and of an aircraft rear section in an embodiment with a dorsal fin.
Figure 17a is a lateral schematic sectional view of the internal structure components of an aircraft rear section with an iso-grid structure.
Figures 17b and 17c are partial sectional views by plane A-A of Figure 17a.
Figure 17d shows the inside of fuselage of the aircraft rear section.
Figure 18a is lateral schematic sectional view of the internal structure components of an aircraft rear section in which part of the rear fuselage is also used as a rudder surface of the vertical tail plane.
Figure 18b is a sectional view by plane A-A of Figure 18a.
Figure 19a shows a lateral view of and aircraft having a boundary layer ingestion turbo fan or hybrid fan engines buried in the fuselage with a continuous skin and partial frontal and top views of the same.
Figures 19b, 19c and 19d are sectional views by planes A-A, B-B and C-C of Figure 19a.
Figures 20a and 20b are respectively a perspective view and a sectional view of the rear section of an aircraft having a V-tail configuration.

### DETAILED DESCRIPTION OF THE INVENTION

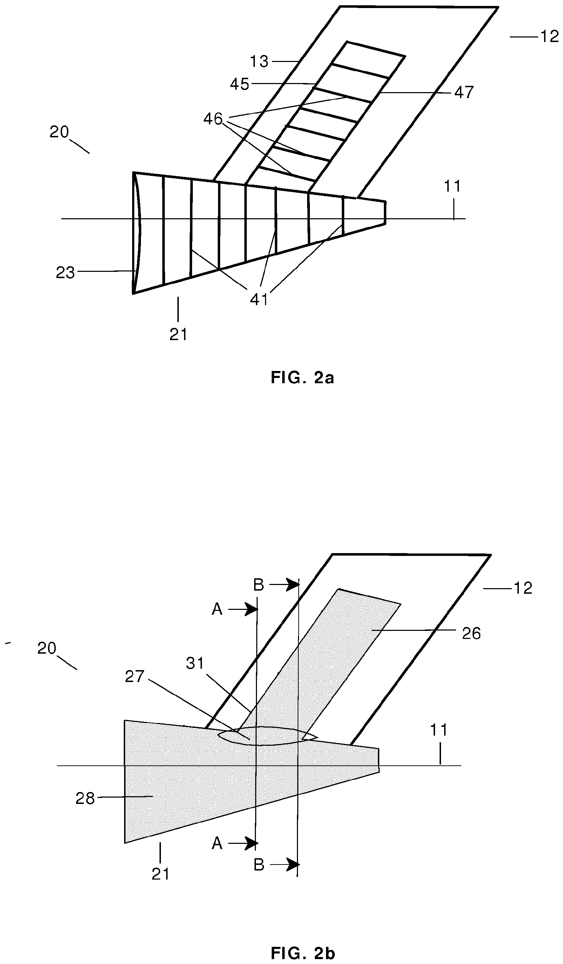

The aircraft according to the invention (see Figures 2a and 2b) and an aircraft of the background art (see Figures 1a and 1b) differ in that the main interface fittings 16 for joining the fuselage rear section 21 and the lateral skins of the torsion box 14 of the vertical tail plane 13 have been eliminated and said junction is accomplished through a continuous skin 31 (formed by two lateral continuous skins placed symmetrically with respect to the middle vertical plane of the aircraft) joined to the inner structural components of the fuselage rear section 21 and of the vertical tail plane 13. Additionally, the fuselage rear section 21 comprises a top panel 33 for the upper part of the fuselage located in between the lateral sides of the continuous skin 31.

The internal structure inside the transition and upper parts of the continuous skin 31, between the front and rear spars 45 and 47, may also comprise ribs 46 and intermediate spars (not represented in Figures 2a, 2b) to provide additional support for the continuous skin 31. In this case, the intermediate spars can extend to the full span length of the torsion box 14 or only to a partial length of it.

The continuous skin 31, the top panel 33 and said inner structural components may be made of composite or metallic materials or of a combination of both and the junction between them can be performed by mechanical discrete means such as rivets or bolts or by continuous surface contact means such as resin or bonding interfaces performed by co-curing, co-bonding, secondary co-bonding or equivalent methods.

Each one of the two lateral continuous skins 31 comprises an upper portion 26, a lower portion 28 and a fillet-type transition portion 27. The upper portion 26 and the upper part of the transition portion 27 form the lateral skin of the torsion box 14 of the vertical tail plane 13 which is joined to the front and rear spars 45, 47 and to the ribs 46. The lower portion 28 and the lower part of the transition portion 27 form the lateral part of the skin of the fuselage rear section 21 which is joined to the frames 41.

The main loads from the lateral skins of the torsion box 14 of the vertical tail plane 13 are not, thus, transmitted to the fuselage rear section 21 by certain interface fittings 16 and by the frames 41 but, directly, from the upper portion 26 to the transition portion 27 and to the lower portion 28 of the continuous skin 31. The transition portion 27 must allow a smooth transition between the surface of the upper portion 26 (substantially planar) and the surface of the lower portion 28 (corresponding typically to a cylindrical or conical fuselage rear section 21) to be able to pass said loads.

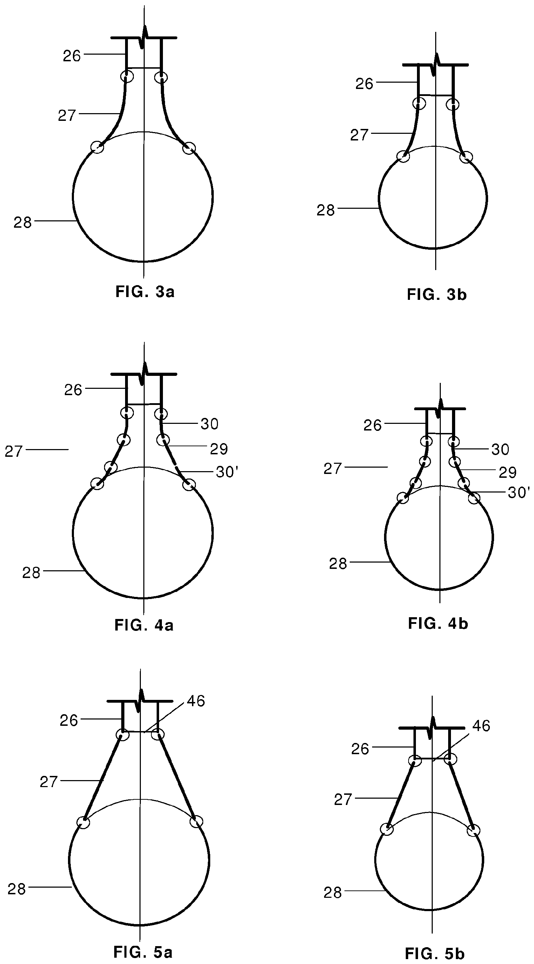

In the embodiment illustrated in Figures 3a, 3b, the fillet-type transition portion 27 is configured with its upper and lower borders tangent to the upper and lower portions 26, 28, and it comprises a single curved surface that can be formed by a single radius curve segment at each section, having smooth variation of the radius of each curve segments at each section to better adapt to the transition geometry and obtain a smooth aerodynamic surface at this area. Alternatively, the single curved surface can be formed by a multiple curvature spline segment at each section, having also smooth variation of this multiple curvature spline at each section to better adapt to the transition geometry and obtain a smooth aerodynamic surface at this area.

In the embodiment illustrated in Figures 4a and 4b the transition portion 27 comprises a central sub-portion 29 (formed by straight lines in each section) and two curved end portions 30, 30' having tangent borders with the central sub-portion 29 and with the upper and lower portions 26, 28.

In the embodiment illustrated in Figures 5a and 5b the transition portion 27 is a surface formed by straight lines tangent to the lower portion 28 and forming an angle with the upper portion 26. A rib 46 can be optionally added at the kink formed by the angle with the upper portion 26 to react the kink load produced at this point. In other embodiment the transition portion 27 is not tangent to the lower portion.

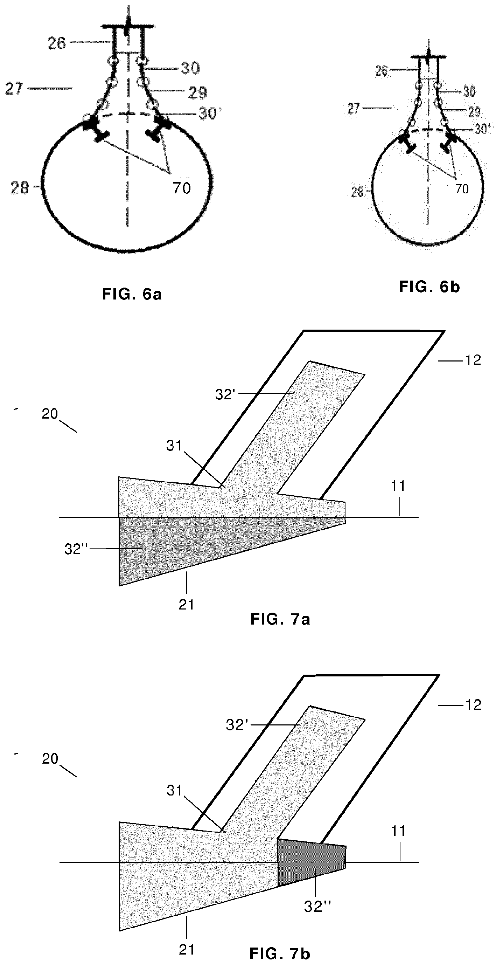

In the embodiment illustrated in Figures 6a and 6b the transition portion 27 is a surface formed by a spline curve tangent to the upper portion 26 and forming an angle with the lower portion 28. Intercostals 70 can be optionally added to the fuselage rear section 21, between the fuselage frames at the kink formed by the angle between the transition portion 27 and the lower portion 28 to react the kink load produced at this point.

The above-mentioned embodiments of the transition portion 27 and its continuity with the upper portion 26 and the lower portion 28 can contain smooth variation of the geometrical parameters at each section along the longitudinal direction of the aircraft to better adapt to the geometry evolution of the vertical tail plane 13 and the fuselage rear section in this direction, obtaining a smooth aerodynamic surface at this area to minimize the drag penalty.

The present invention also covers any combination of the above-mentioned embodiments for the continuity of the transition portion 27 with the upper portion 26 and for the continuity of the transition portion 27 with the lower portion 28.

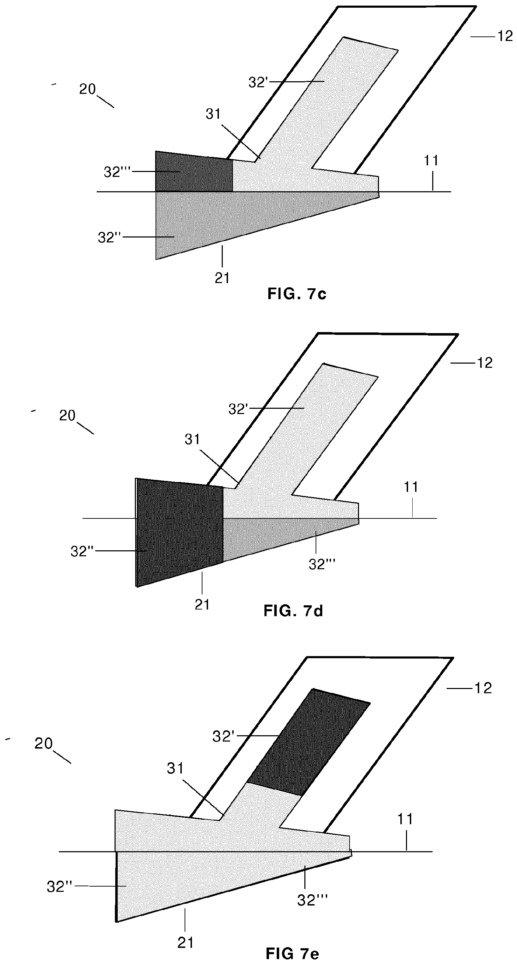

As illustrated in Figures 7a, 7b, 7c, 7d, and 7e the continuous skin 31 may be split in parts 32', 32"; 32', 32", 32'" to be joined together mechanically by discrete means such as rivets or bolts or by continuous surface contact means such as resin or bonding interfaces performed by co-curing, co-bonding or secondary co-bonding methods or equivalent methods. Splitting the continuous skin 31 increases its weight due to joints but easies the manufacturing and logistic for transporting the parts.

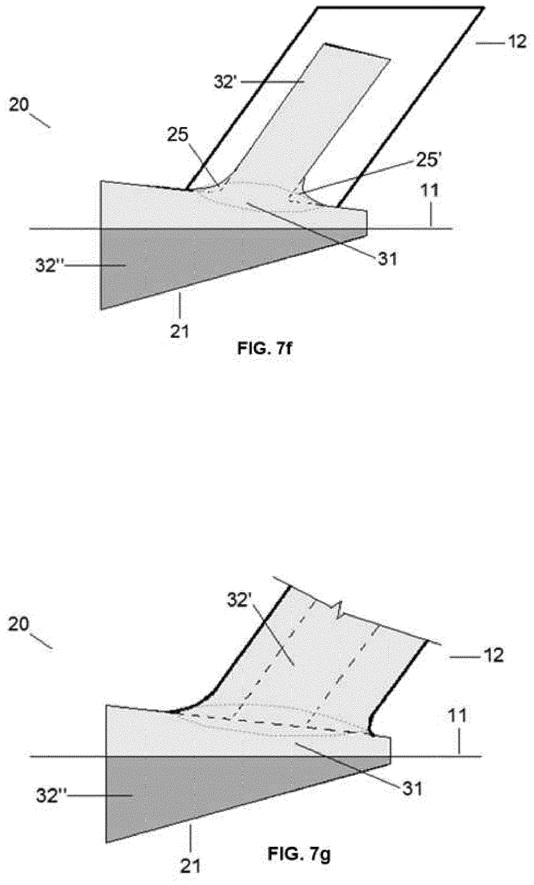

In the embodiment illustrated in Figure 7f the continuous skin 31 may have additionally forward and/or rear fillet extensions 25 and 25' in the front and rear areas at the junction between the transition portion and the lower portion to allow a smoother load introduction in the lower portion.

In the embodiment illustrated in Figure 7g, the continuous skin 31 extends forward and rearward covering totally the leading edge and the trailing edge.

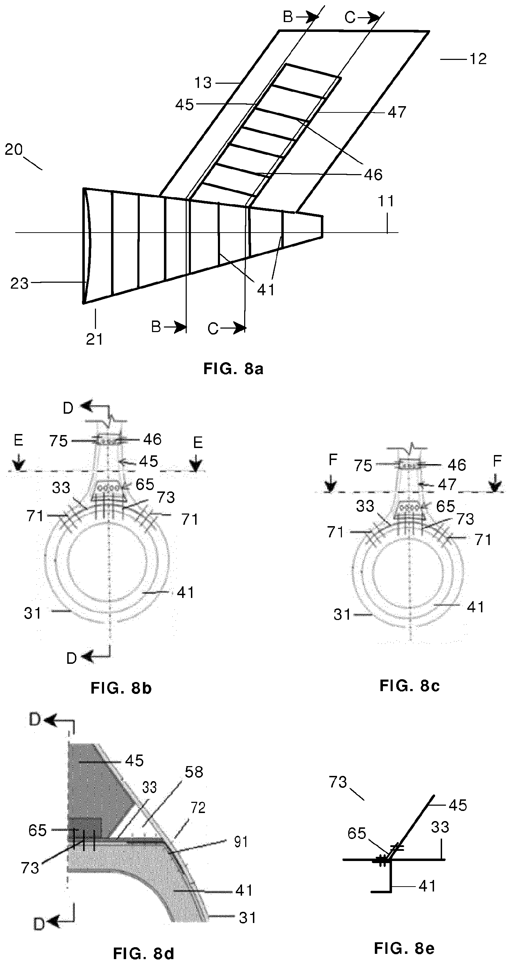

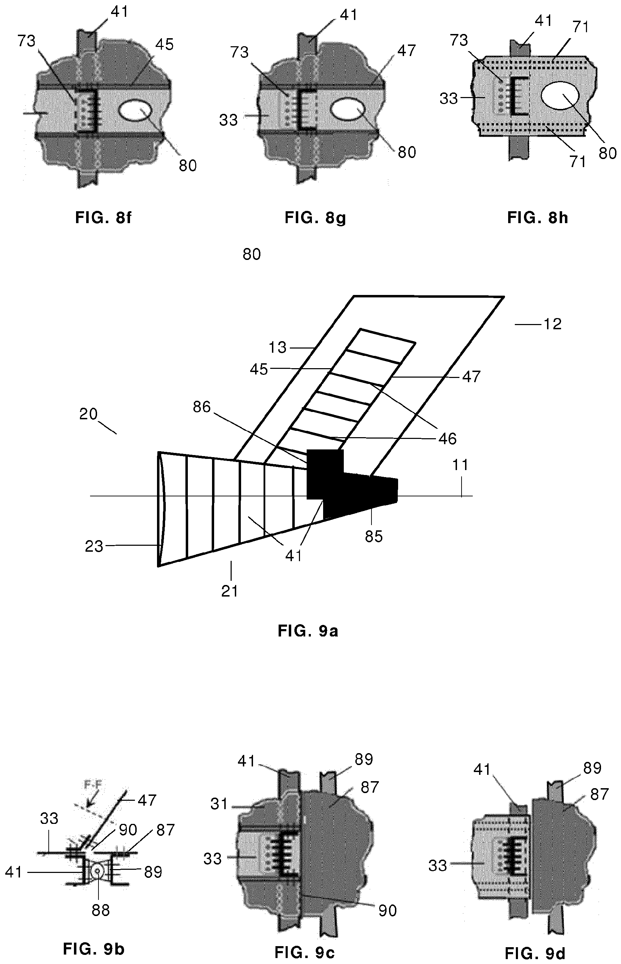

As illustrated in Figures 8a-8h, the fuselage rear section 21 also comprises a top panel 33 and the inner structural components comprise vertical frames 41 (perpendicular to the longitudinal axis 11) in the fuselage rear section 21 and front and rear spars 45, 47 and ribs 46 in the vertical tail plane 13. Between the frames 41 and the front and rear spars 45, 47, there is a kink angle at its intersection area. The top panel 33 is necessary to react the kink loads at the kink location and needs to be placed as close as possible to these kinks, as a continuation of the upper skin of the fuselage forward of the interface with the vertical tail plane. In the embodiment illustrated in Figures 8a-8h, the top panel 33 is attached to the continuous skin 31 by overlapping of their panels and the junction with the web of spar 45 is performed by an angular splice 65 as shown in Figures 8b and 8c.

Alternatively, as shown in Figure 8d, the top panel 33 of the fuselage is joined by an angular splice 91 to the continuous skin 31 rather than been overlapped with it. In this embodiment, the top panel 33 becomes substantially flat at the area below the torsion box of the vertical tail plane 13 to easy the assembly. Also to easy the access to the area at the bottom of the vertical tail plane 13 the top panel 33 and ribs of the vertical tail plane 13 can have access holes 80 as represented particularly in Figures 8f-8h.

In the embodiments where the top panel 33 is present, there could also be, optionally, an area 58 between the spars 45 or 47 and the corner resulting at the intersection of the continuous skin 31 and the top panel 33 which is not supported by the spar 45 to facilitate the assembly and allow deformation between these parts, as shown in Figure 8d.

Thus, five rivet-type joints between the different parts can be distinguished on the embodiments illustrated in Figures 8a-8h:
- Joints 71 between the top panel 33 and the continuous skin 31.
- Joints 72 between the top panel 33, the continuous skin 31 and the frames 41.
- Joints 73 between a front or rear spar 45, 47, the top panel 33 and a frame 41 through an angular splice 65.
- Joints 75 between the ribs 46 and the front or rear spars 45, 47.
- Joint 76 between the continuous skin 31 and the front or rear spar 45, 47.

Alternatively, the angular splice 65 that junctions the web of spars 45 and 47 to the top panel 33 at joint 73 can be replaced by a flange integrated on the spar webs to reduce the number of parts.

Alternatively, the attachment of the spars 45 and 47 to the top panel 33 and the frames 41 at joint 73 can be achieved by means of discrete attachments with rods.

Alternatively, the angular splice 91 that joints the substantially flat top panel 33 and the continuous skin 31 can be replaced by a flange integrated on the top panel 33 to reduce the number of parts.

Additional ribs 46 and intermediate spars can be added to the internal structure inside the transition and the upper portion of the continuous skin 31, between the front and rear spars 45 and 47, to provide additional support to it. In this case, the intermediate spars can extend to the full span length of the torsion box 14 or only to a partial length of it.

With respect to the embodiments illustrated in Figures 8a-8h, in the embodiments illustrated in Figures 9a-9d there is an independent rear cone 85 located after the fuselage frame 41 placed at the interface with the rear spar 47 and attached to this frame by means of discrete fittings 88. The rear cone 85 is not covered by the continuous skin 31 in these embodiments. The advantage of these embodiments is that it is assured a smooth transition of heavy loads from the vertical tail plane 13 to the continuous skin 31 and from it to the rest of the forward fuselage and still allowing an easy assembly and maintenance of the independent rear cone 85 that contains conventionally the auxiliary power unit. Figures 9b-9d show detailed views of the intersection area 86 between the rear spar 47, the top panel 33, the continuous skin 31 and the independent rear cone 85. The discrete fittings 88 making the junction of the rear cone 85 and the fuselage rear section 21 (see particularly Figure 9b) is a lug type fitting making the junction between the last frame 41 of the rear fuselage and the first frame 89 of the rear cone 85. This frame 89 is attached the rear cone skin 87 that has a structural discontinuity 90 with the top panel 33 and so with the continuous skin 31. At the interface 86 of the rear cone skin 87 and the top panel 33, there is an air tight seal (not shown) between the two elements to reduce the possible gap and step and avoid drag penalty. The discrete fittings 88 are distributed circumferentially on the web of the frame 41 as needed to sustain the entire rear cone 85 to the rest of the rear fuselage and easing its assembly and disassembly.

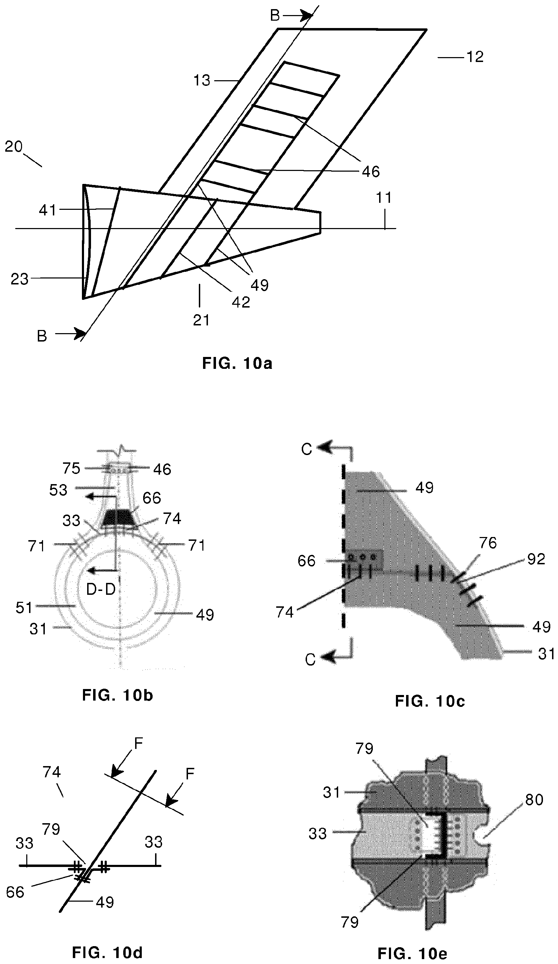

In the configuration illustrated in Figures 10a-10j the fuselage rear section 21 also comprises a top panel 33 and the inner structural components comprise slanted frames 42, two slanted frame-spar ensembles 49 comprising a lower portion 51 configured as a fuselage frame and an upper portion 53 configured as a front or rear spar 45, 47 of the vertical tail plane 13 and ribs 46 in the vertical tail plane 13. The slanted frame-spar ensembles 49 can be formed by a single integrated part or by an assembly of different parts joined together mechanically. In this embodiment, due to the slanted frames that are located in the same plane as the spars, forming a slanted frame-spar ensemble 49, there is not a kink angle at the intersection area between the frames 41 and the front and rear spars 45, 47. As consequence, there are not kink loads, so that the top panel 33 is not strictly necessary to react to those loads because the slanted frame-spar ensembles 49 are more effective. Alternatively, additional intermediate slanted frame-spar ensembles 49 can be present between the front and rear spars 45 and 47.

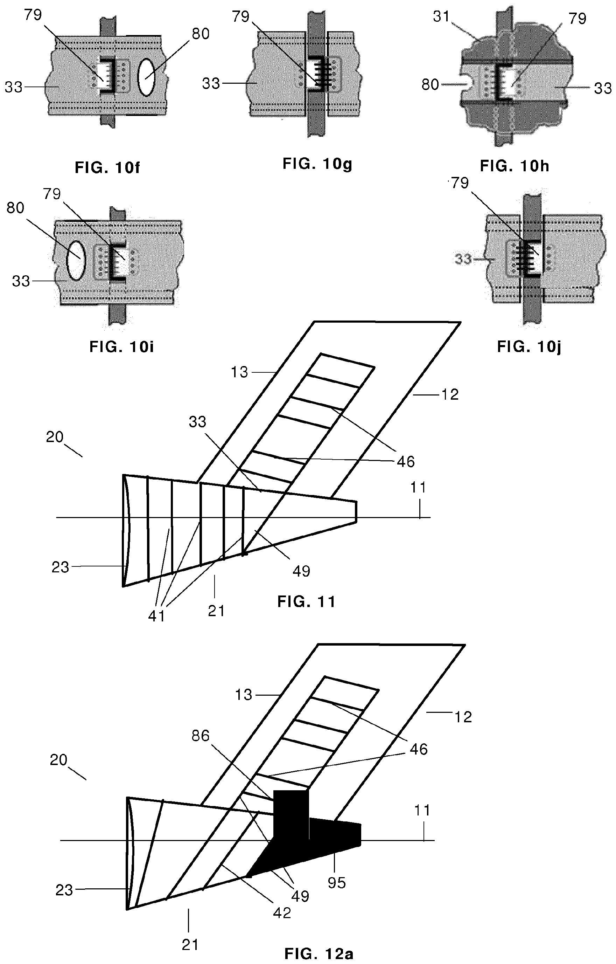

In one particular configuration (see Figures 10b, 10d, 10e, 10f, 10h and 10i) the top panel 33 is present and it is a continuation of the upper skin of the fuselage forward of the vertical tail plane interface. It is attached to the continuous skin 31 by overlapping of the panels in joints 71. In this case, the top panel 33 is a single part and it needs to include cut-outs 79 to allow the passing of the slanted frame-spar ensembles 49. Also it can have access holes 80 to easy the access to the area at the bottom of the vertical tail plane 13. The junction 74 of the slanted frame-spar ensembles 49 and the top panel 33 is performed by means of angular splices 66.

In another configuration (see Figures 10c, 10d, 10e, 10g, 10h and 10j) the top panel 33 is not an exact continuation of the upper skin of the fuselage forward of the vertical tail plane interface, making the assembly easier. The kink interface between the frames and the spars is not present, so that the top panel 33 do not react the kink loads and it can be placed on different height. In this case the top panel 33 can become substantially flat as a rib to easy the manufacturing and can be attached to the continuous skin 31 by means of a joint 76 using an additional angular splice 92 (see Figure 10c) or by integrating directly a flange on the panel. In this case, the top panel 33 is not a single part and it is divided at each intersection with the slanted frame spar ensemble 49 (see Figures 10g and 10j). The junction of the slanted frame-spar ensembles 49 and the top panel 33 is performed by means of angular splices 66 or by an integrated flange at the top panel 33. In this case the top panel 33 can also have access holes 80 to easy the access to the area at the bottom of the vertical tail plane 13.

In the configuration illustrated in Figure 11 the fuselage rear section 21 also has a top panel 33 and the inner structural components have only one slanted frame-spar ensemble 49 comprising a lower portion configured as a fuselage frame and an upper portion configured as a rear spar of the vertical tail plane 13 and ribs 46 in the vertical tail plane 13. This configuration has the advantages of slanted frame-spar ensembles 49 without the kink, more efficient to take the heavier loads of the rear spar but without affecting the rest of the frames that are less loaded and can keep their perpendicularity with respect to the longitudinal axis of the fuselage to easy the assembly.

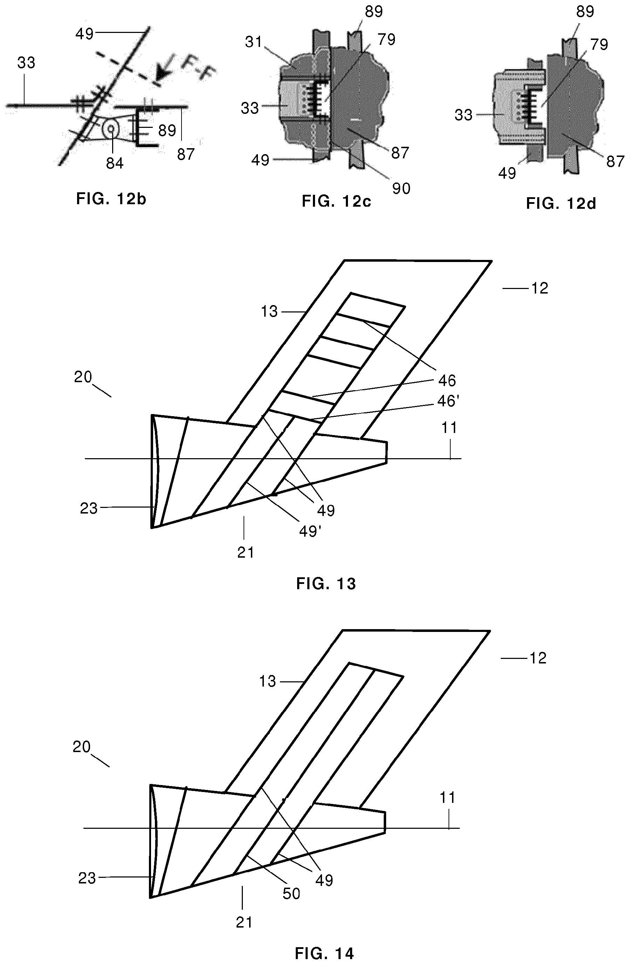

The configuration illustrated in Figures 12a-12d is similar to that illustrated in Figures 9a-9d with an independent rear cone 85 but adapted to an embodiment with slanted frame-spar ensembles 49. It includes discrete fittings 84 and a skin 87.

In the configuration illustrated in Figure 13 the fuselage rear section 21 does not comprise a top panel 33 between the slanted frame-spar ensembles 49, that is not necessary due to the removal of the frame and spar kink, with the advantage of providing better access to this zone for manufacturing and inspection. It also includes at least a middle slanted frame-spar ensemble 49' that only extends partially inside the torsion box of the vertical tail plane until the first rib 46'. Alternatively this middle slanted frame-spar ensemble 49' could extend up to another rib or even up to the full length of the vertical tail plane box.

In the configuration illustrated in Figure 14 the fuselage rear section 21 has a multi-spar structure formed by forward and rear slanted frame-spar ensembles 49 and at least an intermediate slanted frame-spar ensemble 50, with the advantage of providing additional support to the upper lateral portions of the continuous skin so that the ribs can be reduced or eliminated completely, simplifying significantly the manufacturing and assembly and reducing the number of parts. If the fuselage rear section 21 is made with composite materials its structure allows a one-shot manufacturing option because it is possible to reduce or eliminate completely the ribs as the continuous skin would be sufficiently supported by the multi-spar structure, forming an assembly of slanted integrated frames that include the spars and continuous skin that can extend to a partial or total extension of the vertical tail plane and the fuselage and that includes the continuous transition skin between these components. This configuration can be manufactured in a single step using an ensemble of Carbon Fiber Reinforced Plastic (CFRP) dry pre-forms lay-ups that are placed on molds and internal mandrills inserted on the internal cavities to maintain the required final shape, to which resin is added by resin transfer molding or resin infusion systems so that the entire or partial structure of the rear end including the spars and the continuous skin can be obtained in one shot with the advantages of reducing the cost and lead time for the assembly of the components and minimizing the penalty weight due to the removal of mechanical junctions. Alternatively the preforms could be already pre-impregnated lay-ups instead of being dry preforms so that it is not necessary to perform the insertion of resin on a second step, allowing simplify the process and tools and performing the curing of the ensemble on autoclave or conventional ovens.

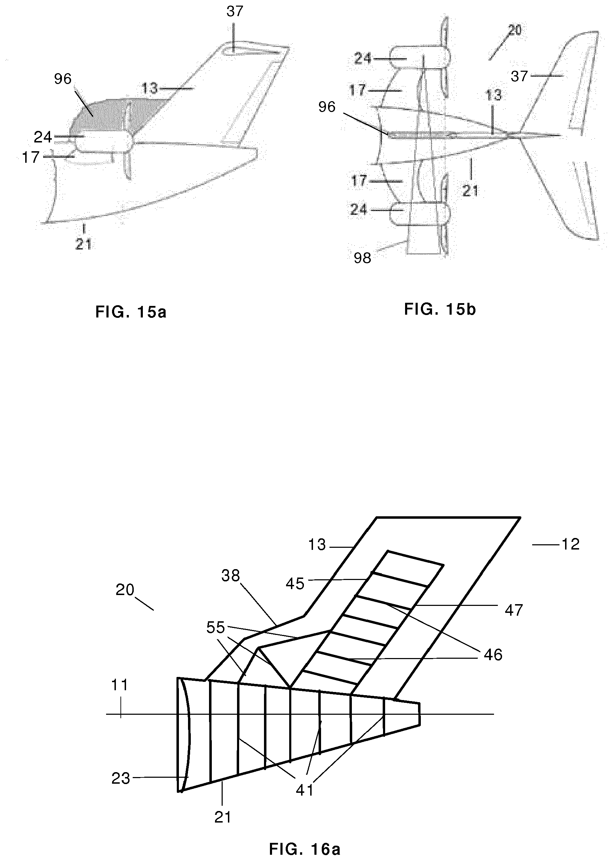

The configuration of the aircraft rear section 20 with a continuous skin 31 is applicable to aircraft having an open rotor propulsion system with engines 24 attached to the fuselage rear section 21 by pylons 17 (see Figures 15a and 15b) and also to an aircraft having a turbofan propulsion system.

In these types of aircraft are known configurations with a shield 96 to be interposed in the trajectories 98 of detached objects of one of the engines, in the case of an engine burst, to avoid an impact in the opposite engine causing catastrophic damage. The implementation of said shield 96 can be done through a dorsal fin 38 supported by certain inner structural elements 55.

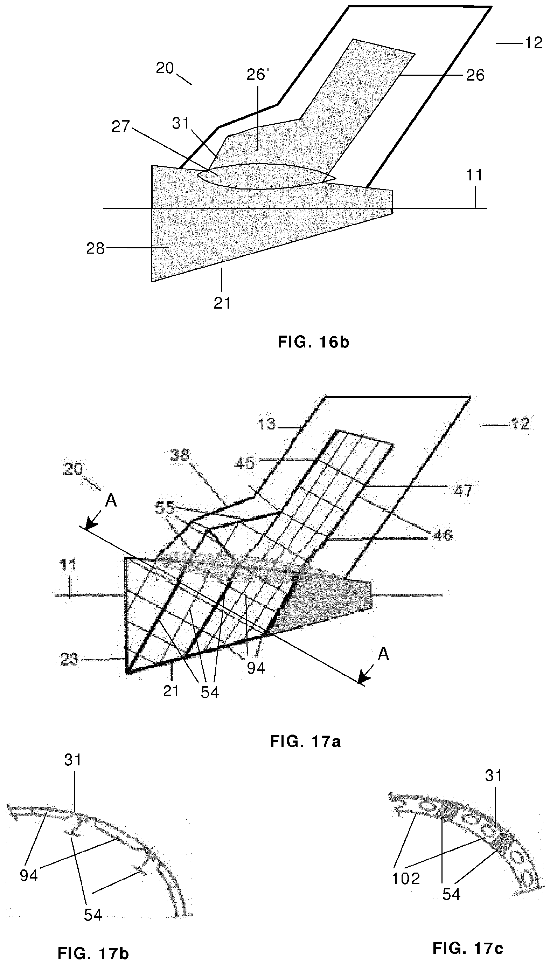

In these configurations, the continuous skin 31 would comprise an additional upper portion 26' for the dorsal fin 38 joined to its inner structural elements 55 as illustrated in Figures 16a-16b.

The continuous skin 31 as a whole or that part of it covering the empennage, fuselage or dorsal fin where there is more risk of an impact of a detached object from an engine would be made so that its impact resistance and damage tolerance is the appropriate to deal with said impact. The continuous skin 31 has the advantage of been thick to be able to pass the main normal loads of the vertical tail plane 13 that are significantly lower on a failure case such as an engine burst. This high thickness of the continuous skin 31 provides an intrinsic shielding and resistance to impact to detached objects from an engine, not requiring significant additional reinforcement and penalty weight to achieve this function.

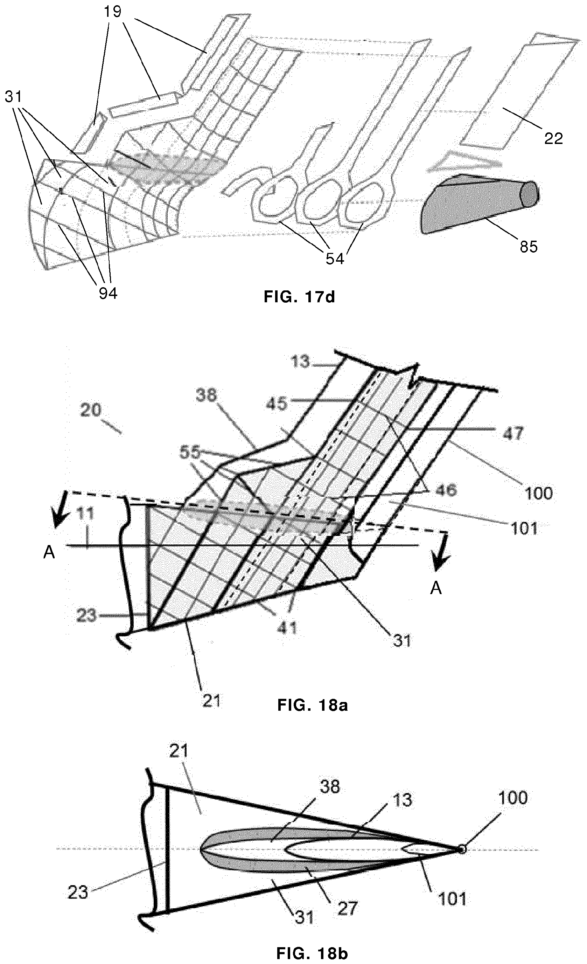

In the configuration illustrated in Figures 17a, 17b, 17d, the internal structure comprise slanted parts 54 (whether frames, slanted frame-spar ensembles or intermediate frame-spar ensembles) and the continuous skin 31 can integrate stiffeners 94 with an complementary angle compared to said slanted parts 54 (i.e. the intersection angle of the slanted parts 54 and the stiffeners 94 is close to 90º) so that the assembly of the slanted parts 54 and the stiffeners 94 conform an iso-grid like structure with structural elements forming an angle closer to +45º and -45º with respect to the longitudinal axis of the aircraft. This configuration provides the advantage of been more resistant to shear loads that are critical for the damage produced when the engine debris impact to the fuselage, so that, in combination with the continuous skin 31, the resultant structure is more damage tolerant for such event.

In an alternative configuration (see Fig. 17c) the stiffeners 94 are replaced by add-on fuselage intercostals 102 that are added between the slanted parts 54 forming an equivalent iso-grid like structure providing also the same advantage of been more resistant to shear loads.

These last configurations are also applicable to the case where the dorsal fin or the engine is not present on the rear end providing additional resistance to shear loads that are also critical on more conventional rear ends.

In the configuration illustrated in Figures 18a-18b the aircraft rear section 20, including a continuous skin, is tapered gradually from the rear pressure bulkhead 23, which has a circumferential or ovoid section, to adapt to the profile section of the vertical tail plane 13, so that the ensemble of the fuselage rear section 21 and the vertical tail plane 13 ends on a trailing edge line 100 of such profile. This provides the advantages of using directly part of the fuselage rear section 21 as lateral surface of the vertical tail plane 13 and rudder 101, so that these components can be reduced, reducing their weight and drag. It also allows an adequate smooth re-compression of the boundary layer of the fuselage so that the rear end aero drag is also reduced.

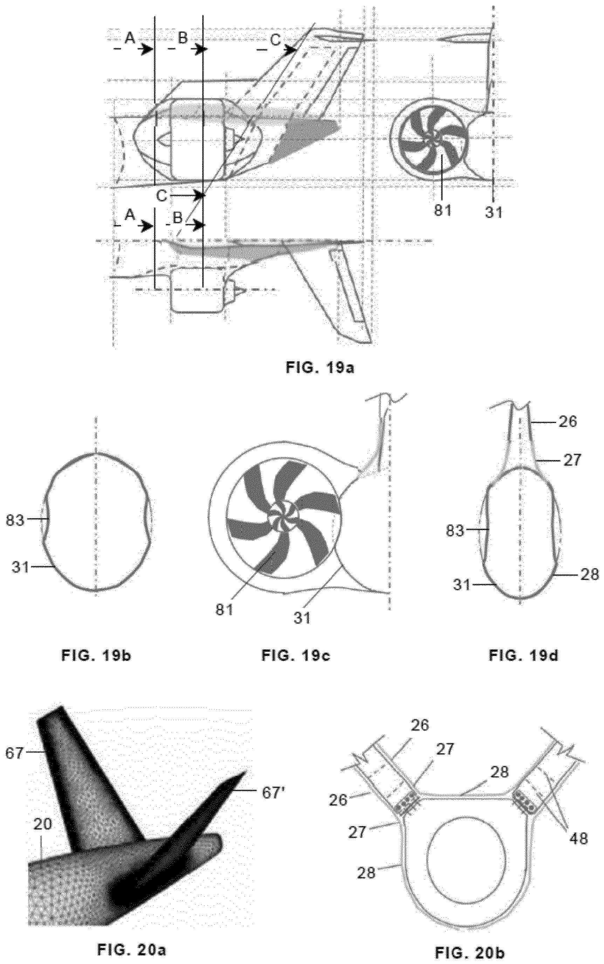

The configuration of the aircraft rear section 20 with a continuous skin 31 is also applicable to aircraft having turbo fans or hybrid fans engines 81 buried in the fuselage rear section (see Figures 19a-19d). These engine integrations are more effective because they ingest the boundary layer from the fuselage that is beneficial for the propulsive efficiency. Due to the buried integration, there is a section reduction 83 in the fuselage rear section 21 that is very suitable for the lower portion 28 and the transition portion 27 of the continuous skin 31.

An important advantage of the invention is the reduction of the aircraft weight resulting from the elimination of the interface fittings 16 and their fairings and from the reduction of the resistant section of the frames 41 that should not receive the loads transmitted by the interface fittings 16. This reduction of resistance of the frames, allow the replacement of conventional strong metallic frames by much lighter composite frames so that the entire structure can be full composite. This full composite assembly is significant lighter and eliminates the risk of thermal dilatation cases that appears when two different materials with very different dilatation coefficients, as aluminum and composite, are joined together. These thermal dilatations cases involve a significant reinforcement and penalty weight that is removed with the proposed solution formed by a full composite structure.

Another important advantage is the aero-drag reduction resulting from the removal of the fairings of interface fittings 16 and from the aerodynamic shape, with smooth transitions, of the continuous skin 31.

An additional advantage is the reduction of cost and complexity of the final assembly line since the fairing are not required to be installed anymore.

The configuration of the aircraft rear section 20 with a continuous skin 31 is also applicable to aircraft with two vertical planes lifting surfaces 67, 67' with inner structural elements 48 in a V-tail configuration (see Figures 20a-20b) -and also to more than two lifting surfaces-attached to the fuselage because everything said about an aircraft with a single vertical plane 13 is applicable "mutatis mutandi" to it.

The configuration of the aircraft rear section with a continuous skin is also applicable to the vertical tail plane interface with the fuselage for aircraft with conventional horizontal tail plane integrations, in which the horizontal tail plane intersect the fuselage by means of a cut-out rearward of the vertical tail plane interface and the horizontal tail plane is able to trim. The continuity of the lateral skins of the fuselage with the fuselage skin is assured at the location of the vertical tail plane, as the horizontal tail plane cut out is decoupled rearward of the interface area of the vertical tail plane with the fuselage.

Although the present invention has been fully described in connection with preferred embodiments, it is evident that modifications may be introduced, provided that they fall within the scope of protection defined by the wording of the following claims.

## Claims

1. Aircraft rear section (20) comprising a fuselage rear section (21) extending from the rear pressure bulkhead (23) to the end of the fuselage and an empennage (12) including at least a vertical tail plane (13) comprising:
- a continuous skin (31) comprising an upper portion (26) corresponding to the skin of the torsion box (14) of the vertical tail plane (13), a lower portion (28) corresponding to the skin of the fuselage rear section (21) and a transition portion (27) between the upper and lower portions (26, 28);
- inner structural components joined to the upper and lower portions (26, 28) of the continuous skin (31),
**characterized in that** the aircraft rear section (20) further comprises a top panel (33) for the portion of the fuselage rear section (21) not covered by the continuous skin (31), the rear fuselage section (21) comprising vertical frames (41) and the vertical tail plane (13) comprising a front (45) and a rear (47) spar, kink angles being formed between a front vertical frame (41) and the front spar (45) and a rear vertical frame (41) and the rear spar (47), the top panel (33) being placed at the kink location as a continuation of the upper skin of the fuselage forward of the vertical plane, and the continuous skin (31) being formed by two lateral sides placed symmetrically with respect to the middle vertical plane of the aircraft, each side comprising the upper portion (26), the lower portion (28) and the transition portion (27).

2. Aircraft rear section (20) according to claim 1, wherein the transition portion (27) is a fillet-shaped curved portion having tangent borders with the upper and lower portions (26, 28) of the continuous skin (31).

3. Aircraft rear section (20) according to claim 1, wherein the transition portion (27) is a fillet-shaped portion comprising a central sub-portion (29) and two curved end sub-portions (30, 30') having tangent borders with the upper and lower portions (26, 28) of the continuous skin (31) and with the central sub-portion (29).

4. Aircraft rear section (20) according to claim 1, wherein the transition portion (27) is a fillet-shaped portion having its lower border tangent or not tangent to the lower portion (28) of the continuous skin (31) and its upper border forming an angle with the upper portion (26) of the continuous skin (31).

5. Aircraft rear section (20) according to any of claims 1-4, wherein the upper portion (26) of each lateral side of the continuous skin (31) also extends to the leading edge (19) and/or to the trailing edge (22) of the vertical tail plane (13).

6. Aircraft rear section (20) according to any of claims 1-5, wherein each lateral side of the continuous skin (31) is a single part.

7. Aircraft rear section (20) according to any of claims 1-5, wherein each lateral side of the continuous skin (31) is an ensemble of several parts (32'. 32", 32") mechanically joined between them.

8. Aircraft rear section (20) according to any of claims 1-7, wherein
- the fuselage rear section (21) comprises a non-structural rear cone (85, 95) joined by discrete fittings (88-84);
- the lower portion (28) of the lateral sides of the continuous skin (31) extends from the rear pressure bulkhead (23) to the rear cone (85-95).

9. Aircraft rear section (20) according to any of claims 1-8, wherein the inner structural components joined to the upper and lower portions (26, 28) of the lateral sides of the continuous skin (31) comprise:
- frames (41) in the fuselage rear section (21);
- a front spar (45), a rear spar (47) and ribs (46) in the vertical tail plane (13).

10. Aircraft rear section (20) according to claim 9, wherein the top panel (33) and the lateral sides of the continuous skin (31) are overlapped in their joints and attached by a rivet-type joint (71) or by continuous surface contact means.

11. Aircraft rear section (20) according to claim 9, wherein the top panel (33) and the lateral sides of the continuous skin (31) are attached by a rivet-type union (72) using an angular splice (91) or by continuous surface contact means.

12. Aircraft rear section (20) according to claim 9, wherein the top panel (33) is attached to the front and rear spars (45, 47) and to their contiguous frames (41) by a rivet-type joint (73) using an angular splice (65) or by continuous surface contact means.

13. Aircraft rear section (20) according to any of claims 1-12 wherein aircraft engines (24) are attached to the fuselage rear section (21).

14. Aircraft rear section (20) according to claim 13, wherein the aircraft engines (24) are open rotor engines attached to the fuselage rear section (21) by means of pylons (17).

15. Aircraft rear section (20) according to claim 13, wherein the aircraft engines are boundary lager ingestion turbo fans or hybrid fans directly attached to the fuselage rear section (21).

16. Aircraft rear section (20) according to any of claims 13-15, wherein:
- the fuselage rear section (21) further comprises a dorsal fin (38) with inner structural elements (55);
- the continuous skin (31) further comprises an additional upper portion (26') for the dorsal fin (38).

17. Aircraft rear section (20) according to any of claims 1-16 , wherein the continuous skin (31), the top panel (33) and the inner structural components are made of composite.

18. Aircraft rear section (20) according to any of claims 1-16 , wherein the continuous skin (31), the top panel (33) and the inner structural components are made of metallic materials.

19. Aircraft comprising a rear section (20) according to any of claims 1-18.

## Patentansprüche

1. Flugzeugheckabschnitt (20) umfassend einen Rumpfheckabschnitt (21), der sich vom hinteren Druckschott (23) zum Ende des Rumpfs erstreckt, und ein Leitwerk (12), das wenigstens ein Seitenleitwerk (13) aufweist, umfassend:
- eine durchgehende Haut (31) umfassend einen oberen Abschnitt (26), der der Haut der Torsionsbox (14) des Seitenleitwerks (13) entspricht, einen unteren Abschnitt (28), der der Haut des Rumpfheckabschnitts (21) entspricht, und einen Übergangsabschnitt (27) zwischen dem oberen und unteren Abschnitt (26, 28);
- innere Strukturkomponenten, die mit dem oberen und unteren Abschnitt (26, 28) der durchgehenden Haut (31) verbunden sind,
**dadurch gekennzeichnet, dass** der Flugzeugheckabschnitt (20) ferner eine obere Platte (33) für den Abschnitt des Rumpfheckabschnitts (21) umfasst, der nicht von der durchgehenden Haut (31) bedeckt ist, der Rumpfheckabschnitt (21) umfassend vertikale Rahmen (41) und das Seitenleitwerk (13) umfassend einen vorderen (45) und einen hinteren (47) Holm, wobei Knickwinkel zwischen einem vorderen vertikalen Rahmen (41) und dem vorderen Holm (45) und einem hinteren vertikalen Rahmen (41) und dem hinteren Holm (47) ausgebildet sind, wobei die obere Platte (33) an der Knickstelle als eine Fortsetzung der oberen Haut des Rumpfs vor der vertikalen Ebene angeordnet ist und die durchgehende Haut (31) von zwei seitlichen Seiten gebildet ist, die symmetrisch bezogen auf die mittlere vertikale Ebene des Flugzeugs angeordnet sind, jede Seite umfassend den oberen Abschnitt (26), den unteren Abschnitt (28) und den Übergangsabschnitt (27).

2. Flugzeugheckabschnitt (20) nach Anspruch 1, wobei der Übergangsabschnitt (27) ein hohlkehlenförmiger gekrümmter Abschnitt mit tangierenden Grenzen zu dem oberen und unteren Abschnitt (26, 28) der durchgehenden Haut (31) ist.

3. Flugzeugheckabschnitt (20) nach Anspruch 1, wobei der Übergangsabschnitt (27) ein hohlkehlenförmiger Abschnitt ist, der einen mittleren Unterabschnitt (29) und zwei gekrümmte End-Unterabschnitte (30, 30') mit tangierenden Grenzen zu dem oberen und unteren Abschnitt (26, 28) der durchgehenden Haut (31) und zu dem mittleren Unterabschnitt (29) umfasst.

4. Flugzeugheckabschnitt (20) nach Anspruch 1, wobei der Übergangsabschnitt (27) ein hohlkehlenförmiger Abschnitt ist, dessen untere Grenze den unteren Abschnitt (28) der durchgehenden Haut (31) tangiert oder nicht, und dessen obere Grenze mit dem oberen Abschnitt (26) der durchgehenden Haut (31) einen Winkel bildet.

5. Flugzeugheckabschnitt (20) nach einem der Ansprüche 1 bis 4, wobei sich der obere Abschnitt (26) jeder seitlichen Seite der durchgehenden Haut (31) auch zu der Vorderkante (19) und/oder der Hinterkante (22) des Seitenleitwerks (13) erstreckt.

6. Flugzeugheckabschnitt (20) nach einem der Ansprüche 1 bis 5, wobei jede seitliche Seite der durchgehenden Haut (31) ein Einzelteil ist.

7. Flugzeugheckabschnitt (20) nach einem der Ansprüche 1 bis 5, wobei jede seitliche Seite der durchgehenden Haut (31) ein Satz aus mehreren Teilen (32', 32", 32") ist, die mechanisch zwischen ihnen verbunden sind.

8. Flugzeugheckabschnitt (20) nach einem der Ansprüche 1 bis 7, wobei
- der Rumpfheckabschnitt (21) einen nicht strukturellen hinteren Kegel (85, 95) umfasst, der durch eigenständige Fittinge (88-84) angefügt ist;
- sich der untere Abschnitt (28) der seitlichen Seiten der durchgehenden Haut (31) vom hinteren Druckschott (23) zum hinteren Kegel (85-95) erstreckt.

9. Flugzeugheckabschnitt (20) nach einem der Ansprüche 1 bis 8, wobei die inneren Strukturkomponenten, die mit dem oberen und unteren Abschnitt (26, 28) der seitlichen Seiten der durchgehenden Haut (31) verbunden sind, Folgendes umfassen:
- Rahmen (41) im Rumpfheckabschnitt (21);
- einen vorderen Holm (45), einen hinteren Holm (47) und Rippen (46) im Seitenleitwerk (13).

10. Flugzeugheckabschnitt (20) nach Anspruch 9, wobei die obere Platte (33) und die seitlichen Seiten der durchgehenden Haut (31) in ihren Verbindungen überlappt sind und durch eine Nietverbindung (71) oder durchgehende Flächenkontaktmittel angebracht sind.

11. Flugzeugheckabschnitt (20) nach Anspruch 9, wobei die obere Platte (33) und die seitlichen Seiten der durchgehenden Haut (31) durch eine Vernietung (72) mithilfe eines Winkelspleißes (91) oder durchgehende Flächenkontaktmittel angebracht sind.

12. Flugzeugheckabschnitt (20) nach Anspruch 9, wobei die obere Platte (33) durch eine Nietverbindung (73) mithilfe eines Winkelspleißes (65) oder durchgehende Flächenkontaktmittel an dem vorderen und hinteren Holm (45, 47) und deren benachbarten Rahmen (41) angebracht ist.

13. Flugzeugheckabschnitt (20) nach einem der Ansprüche 1 bis 12, wobei Flugzeugtriebwerke (24) am Rumpfheckabschnitt (21) angebracht sind.

14. Flugzeugheckabschnitt (20) nach Anspruch 13, wobei die Flugzeugtriebwerke (24) Open-Rotor-Triebwerke sind, die mittels Pylonen (17) am Rumpfheckabschnitt (21) angebracht sind.

15. Flugzeugheckabschnitt (20) nach Anspruch 13, wobei die Flugzeugtriebwerke Grenzschichtaufnahme-Turbofans oder Hybridfans sind, die direkt am Rumpfheckabschnitt (21) angebracht sind.

16. Flugzeugheckabschnitt (20) nach einem der Ansprüche 13 bis 15, wobei:
- der Rumpfheckabschnitt (21) ferner eine Rückenflosse (38) mit inneren Strukturelementen (55) umfasst;
- die durchgehende Haut (31) ferner einen zusätzlichen oberen Abschnitt (26') für die Rückenflosse (38) umfasst.

17. Flugzeugheckabschnitt (20) nach einem der Ansprüche 1 bis 16, wobei die durchgehende Haut (31), die obere Platte (33) und die inneren Strukturkomponenten aus Verbundwerkstoff hergestellt sind.

18. Flugzeugheckabschnitt (20) nach einem der Ansprüche 1 bis 16, wobei die durchgehende Haut (31), die obere Platte (33) und die inneren Strukturkomponenten aus metallischen Materialien hergestellt sind.

19. Flugzeug umfassend einen Heckabschnitt (20) nach einem der Ansprüche 1 bis 18.

## Revendications

1. Section arrière d'aéronef (20) comprenant une section arrière de fuselage (21) s'étendant de la cloison de pression arrière (23) à l'extrémité du fuselage et un empennage (12) comprenant au moins un stabilisateur vertical (13) comprenant :
un revêtement continu (31) comprenant une partie supérieure (26) correspondant au revêtement du caisson de torsion (14) du stabilisateur vertical (13), une partie inférieure (28) correspondant au revêtement de la section arrière de fuselage (21) et une partie de transition (27) entre les parties supérieure et inférieure (26, 28) ;
des éléments structuraux internes reliés aux parties supérieure et inférieure (26, 28) du revêtement continu (31),
**caractérisé en ce que** la section arrière d'aéronef (20) comprend en outre un panneau supérieur (33) pour la partie de la section arrière de fuselage (21) non recouverte par le revêtement continu (31), la section arrière de fuselage (21) comprenant des cadres verticaux (41) et le stabilisateur vertical (13) comprenant un longeron avant (45) et arrière (47), des angles de pliage étant formés entre un cadre vertical avant (41) et le longeron avant (45) et un cadre vertical arrière (41) et le longeron arrière (47), le panneau supérieur (33) étant placé à l'endroit du pliage en tant que prolongement du revêtement supérieur du fuselage en avant du plan vertical, et le revêtement continu (31) étant formé par deux côtés latéraux placés symétriquement par rapport au plan vertical médian de l'aéronef, chaque côté comprenant la partie supérieure (26), la partie inférieure (28) et la partie de transition (27).

2. Section arrière d'aéronef (20) selon la revendication 1, la partie de transition (27) étant une partie courbe en forme de filet ayant des bords tangents aux parties supérieure et inférieure (26, 28) du revêtement continu (31).

3. Section arrière d'aéronef (20) selon la revendication 1, la partie de transition (27) étant une partie en forme de filet comprenant une sous-partie centrale (29) et deux sous-parties d'extrémité courbes (30, 30') ayant des bords tangents aux parties supérieure et inférieure (26, 28) du revêtement continu (31) et à la sous-partie centrale (29).

4. Section arrière d'aéronef (20) selon la revendication 1, la partie de transition (27) étant une partie en forme de filet ayant son bord inférieur tangent ou non tangent à la partie inférieure (28) du revêtement continu (31) et son bord supérieur formant un angle avec la partie supérieure (26) du revêtement continu (31).

5. Section arrière d'aéronef (20) selon l'une quelconque des revendications 1 à 4, la partie supérieure (26) de chaque côté latéral du revêtement continu (31) s'étendant également jusqu'au bord d'attaque (19) et/ou au bord de fuite (22) du stabilisateur vertical (13).

6. Section arrière d'aéronef (20) selon l'une quelconque des revendications 1 à 5, chaque côté latéral du revêtement continu (31) étant une pièce unique.

7. Section arrière d'aéronef (20) selon l'une quelconque des revendications 1 à 5, chaque côté latéral du revêtement continu (31) étant un ensemble de plusieurs parties (32', 32'', 32" reliées mécaniquement entre elles.

8. Section arrière d'aéronef (20) selon l'une quelconque des revendications 1 à 7,
la section arrière de fuselage (21) comprenant un cône arrière non structural (85, 95) relié par des raccords discrets (88-84) ;
la partie inférieure (28) des côtés latéraux du revêtement continu (31) s'étendant de la cloison de pression arrière (23) au cône arrière (85-95).

9. Section arrière d'aéronef (20) selon l'une quelconque des revendications 1 à 8, les composants structuraux internes reliés aux parties supérieure et inférieure (26, 28) des côtés latéraux du revêtement continu (31) comprenant :
des cadres (41) dans la section arrière de fuselage (21) ;
un longeron avant (45), un longeron arrière (47) et des nervures (46) dans le stabilisateur vertical (13).

10. Section arrière d'aéronef (20) selon la revendication 9, le panneau supérieur (33) et les côtés latéraux du revêtement continu (31) étant chevauchés dans leurs joints et fixés par un joint de type rivet (71) ou par un moyen de contact de surface continu.

11. Section arrière d'aéronef (20) selon la revendication 9, le panneau supérieur (33) et les côtés latéraux du revêtement continu (31) étant fixés par un raccord de type rivet (72) à l'aide d'une épissure angulaire (91) ou par un moyen de contact de surface continu.

12. Section arrière d'aéronef (20) selon la revendication 9, le panneau supérieur (33) étant fixé aux longerons avant et arrière (45, 47) et à leurs cadres contigus (41) par un joint de type rivet (73) au moyen d'une épissure angulaire (65) ou par un moyen de contact de surface continu.

13. Section arrière d'aéronef (20) selon l'une quelconque des revendications 1 à 12, des moteurs d'aéronef (24) étant fixés à la section arrière de fuselage (21).

14. Section arrière d'aéronef (20) selon la revendication 13, les moteurs d'aéronef (24) étant des moteurs à rotor ouvert fixés à la section arrière de fuselage (21) au moyen de pylônes (17).

15. Section arrière d'aéronef (20) selon la revendication 13, les moteurs d'aéronef étant des turbosoufflantes à ingestion de couche limite ou des ventilateurs hybrides directement fixés à la section arrière de fuselage (21).

16. Section arrière d'aéronef (20) selon l'une quelconque des revendications 13 à 15,
la section arrière de fuselage (21) comprenant en outre une arrête dorsale (38) avec des éléments structuraux internes (55) ;
le revêtement continu (31) comprenant en outre une partie supérieure supplémentaire (26') pour l'arrête dorsale (38).

17. Section arrière d'aéronef (20) selon l'une quelconque des revendications 1 à 16, le revêtement continu (31), le panneau supérieur (33) et les composants structuraux internes étant en composite.

18. Section arrière d'aéronef (20) selon l'une quelconque des revendications 1 à 16, le revêtement continu (31), le panneau supérieur (33) et les composants structuraux internes étant en matériaux métalliques.

19. Aéronef comprenant une section arrière (20) selon l'une quelconque des revendications 1 à 18.
